# FASCICULE DE BREVET EUROPEEN

(11) **EP 0 840 689 B1**
(45) Date de publication et mention de la délivrance du brevet: **21.04.1999**
(21) Numéro de dépôt: 96928502.2
(22) Date de dépôt: 09.08.1996
(51) Int. Cl.: B62M 3/04

(54) **PEDALIER POUR BICYCLETTE COMPORTANT DES BRAS DE LONGUEUR VARIABLE**
FAHRRADTRETKURBEL MIT VERÄNDERLICHER ARMLÄNGE
BICYCLE CRANKSET WITH VARIABLE LENGTH ARMS

(30) Priorité: 18.08.1995 FR 9510065
(43) Date de publication de la demande: 13.05.1998
(73) Titulaire: Valat, Eric, 34740 Vendargues (FR)
(72) Inventeur: Valat, Eric, 34740 Vendargues (FR)
(74) Mandataire: Somnier, Jean-Louis
(86) Numéro de dépôt international: FR9601274
(87) Numéro de publication internationale: WO9707015

(56) Documents cités:
- DE-A- 3 318 877
- FR-A- 2 689 592
- FR-E- 60 159
- GB-A- 109 324

## Description

La présente invention a pour objet un pédalier pour bicyclette comportant des bras de longueur variable et une bicyclette équipée d'un tel pédalier.

Le secteur technique de l'invention est le domaine de la fabrication de bicyclettes.

On connaît déjà par la demande de brevet FR 2.689.592 (VALAT Eric) un pédalier pour bicyclettes, dont les manivelles sont extensibles en mouvement, permettant de réduire l'effort à produire sur les pédales pour l'entraînement de la bicyclette.

Les bras du pédalier décrit dans ce document comportent chacun une partie fixe ou bras fixe, fixée à une extrémité d'un arbre d'entraînement du plateau qui est mobile en rotation selon un axe horizontal ; chaque bras comporte une partie mobile ou bras mobile en translation radiale par rapport à ladite partie fixe et recevant une pédale montée libre en rotation selon un axe parallèle à l'axe de rotation de l'arbre du pédalier, normalement sensiblement horizontal, par rapport à l'extrémité libre de ladite partie mobile.

Ledit pédalier comporte en outre une came ou excentrique en forme de disque épais, fixée au boîtier du pédalier et/ou au cadre d'une bicyclette équipée du pédalier, sur la tranche de laquelle peuvent rouler deux galets montés libres en rotation, selon des axes respectifs parallèles à l'axe de rotation de l'arbre du pédalier, normalement sensiblement horizontaux ou parallèles entre eux, par rapport à ladite partie mobile du bras ou manivelle.

L'objectif de la présente invention est d'améliorer les pédaliers décrits dans ce document.

L'objectif de la présente invention consiste plus particulièrement à permettre de réduire encore l'effort à produire sur les pédales pour l'entraînement de la bicyclette.

Conformément à l'invention, dans un plan vertical, c'est-à-dire perpendiculaire à l'axe de rotation de l'arbre du pédalier, un premier axe (23) tournant avec lesdits bras ou manivelles, passant par la trace dans ledit plan vertical des axes respectifs de rotation desdits galets (et passant sensiblement par la trace dudit axe de rotation dudit arbre du palier), fait un premier angle (26) positif, par référence au sens de rotation des bras ou manivelles, avec l'axe (7) longitudinal (qui est radial par référence à l'axe de rotation de l'arbre du pédalier) selon lequel s'étend ledit bras ou manivelle.

En d'autres termes, dans un plan perpendiculaire à l'axe de rotation de l'arbre du pédalier, un premier axe (23) tournant de manière homocinétique avec les bras ou manivelles, passant par les traces des axes respectifs de rotation des galets, fait un premier angle (26) positif (par référence au sens de rotation des manivelles), avec un axe tournant de manière homocinétique avec la manivelle et passant par la trace de l'axe de rotation de l'arbre et par la trace de l'axe de rotation de la pédale.

En d'autres termes, la trace dans un plan vertical d'un plan tournant contenant les axes de rotation des galets, est inclinée d'un premier angle (26) positif par rapport à un plan tournant contenant l'axe de rotation de l'arbre du pédalier et l'axe de rotation de la pédale (montée à l'extrémité de la partie mobile de la manivelle).

Selon un mode préférentiel de réalisation, ledit premier angle séparant le premier axe tournant avec le bras et passant par la trace des axes de rotation des galets et l'axe longitudinal tournant du bras ou manivelle, est supérieur ou égal à un deuxième angle (27) positif (par référence au sens de rotation) ou nul, d'inclinaison entre un deuxième axe ((25) fixe) passant par la trace de l'axe de rotation de l'arbre (dans un plan perpendiculaire à celui-ci) et l'apogée du profil périphérique (ou de la tranche, dans un plan vertical) de la came, et la verticale (ou en d'autres termes la position angulaire au point mort haut de l'axe longitudinal de la manivelle).

En d'autres termes, lorsque la manivelle est au point mort haut, l'un des deux galets portés par la manivelle, prenant appui dans une partie supérieure de la carte, a dépassé l'apogée de la came.

Selon des modes préférentiels de réalisation :
- ledit premier angle (26) a une valeur comprise entre 5 et 90 degrés, et ledit deuxième angle (27) a une valeur comprise entre 0 et 35 degrés, de préférence entre 5 et 30 degrés ;
- des moyens de guidage en translation de la partie mobile de la manivelle par rapport à la partie fixe de la manivelle, sont constitués par des cages à aiguilles ;
- la partie mobile de la manivelle est essentiellement symétrique par rapport à un plan longitudinal médian (47) ;
- la partie mobile de la manivelle est essentiellement constituée par deux éléments allongés courbés (ou coudés) à l'une au moins de leurs extrémités et assemblés par des faces planes situées auxdites extrémités ;
- la partie mobile de la manivelle comporte des cales pelables insérées entre lesdites faces d'appui et aptes à permettre un réglage du parallélisme des faces de guidage en coulissement de l'élément mobile par rapport à l'élément fixe de la manivelle ;
- ledit bras fixe est essentiellement constitué par un élément allongé cylindrique, dont la section transversale comporte au moins quatre côtés correspondant à quatre faces planes parallèles deux à deux et définissant deux 〈〈 V 〉〉 disposés tête-bêche, dont les arêtes externes sont protubérantes latéralement et parallèlement à l'axe longitudinal de la manivelle et permettent de coopérer avec des faces planes parallèles deux à deux prévues sur les parties internes des éléments allongés de la partie mobile de la manivelle ;
- lesdites faces en forme de 〈〈 V 〉〉, permettant le coulissement et le guidage en translation de ladite partie mobile de manivelle par rapport à ladite partie fixe de manivelle, font un angle compris entre 75 et 120°, par exemple voisin de 90° ;
- le plateau est fixé à la partie mobile de la manivelle et est de forme ovale telle que le point, qui est tangent au profil externe du plateau en son sommet, soit fixe, afin que le brin supérieur tendu de la chaîne s'étende selon une direction (ou un axe) fixe lors de la rotation et du déplacement en translation du plateau ;
- l'axe de rotation de la pédale est décalé de l'axe longitudinal de la manivelle, d'un angle compris entre 0 et 30°.

Le résultat de la présente invention consiste également à procurer une bicyclette équipée d'un pédalier selon l'invention.

Les pédaliers selon l'invention permettent, du fait de la variation de la longueur de la manivelle lors d'un tour de rotation de cette manivelle (selon l'axe de l'arbre du pédalier), une variation de longueur, par exemple de 175 à 200 millimètres, dans tous les cas généralement comprise entre 150 et 220 millimètres.

Grâce au décalage angulaire entre le point mort haut et l'axe passant par les galets, on peut réduire l'effort à produire sur les pédales, lorsque la manivelle est au voisinage de cette position angulaire.

De plus, grâce au fait qu'au voisinage de la position de la manivelle correspondant au point mort haut, le galet supérieur a dépassé le point supérieur ou apogée (dans une vue latérale) du profil de la came (qui est montée fixe par rapport au boîtier de pédalier), l'effort dans cette zone ou plage de position angulaire, est également réduit et permet une utilisation plus confortable du cycle équipé du pédalier selon l'invention.

Par ailleurs, la structure de la manivelle selon l'invention, comportant un élément tournant oui est fixé à l'arbre du pédalier et un élément coulissant par rapport à l'élément tournant qui est situé en avant et en arrière de l'élément tournant fixe, par référence au sens d'avance du cycle, dans une position normale de montage du pédalier sur celui-ci, permet de réaliser une manivelle à longueur variable très légère, d'encombrement réduit et peu coûteuse.

Grâce à l'utilisation de cages à aiguilles (ou à rouleaux de très faible diamètre) de préférence coudées en 〈〈 V 〉〉 et insérées entre des faces de coulissement respectivement prévues sur les parties fixes et mobiles de la manivelle, qui sont également conformées en 〈〈 V 〉〉, comme moyens facilitant le coulissement de la partie mobile de la manivelle par rapport à la partie fixe de la manivelle, on peut obtenir un coulissement à frottements excessivement réduits et une grande raideur mécanique, dont l'encombrement est très faible et le poids très réduit, notamment par rapport au système de douilles à billes décrit dans le brevet sus-référencé.

Les nombreux avantages procurés par l'invention seront mieux compris au travers de la description oui se réfère aux dessins annexés oui illustrent sans aucun caractère limitatif des modes préférentiels de réalisation de pédalier selon l'invention.
La figure 1 illustre en vue latérale un pédalier selon l'invention.
La figure 2 illustre en vue en plan et est sensiblement une vue selon II/II de la figure 1 d'un pédalier selon l'invention.
La figure 3 illustre en détail un mode particulier de réalisation des moyens de coulissement de la manivelle de longueur variable. Les figures 4 et 5 illustrent deux variantes de réalisation de la structure de la partie mobile de la manivelle.
La figure 6 illustre partiellement en vue latérale, une variante de réalisation de l'invention dans laquelle le plateau est fixé à la partie coulissante d'une manivelle.

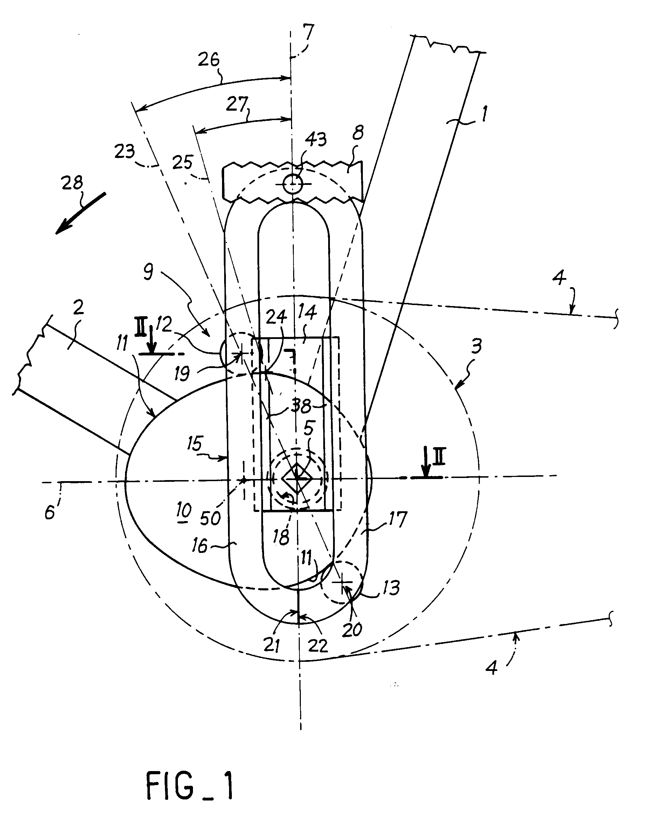

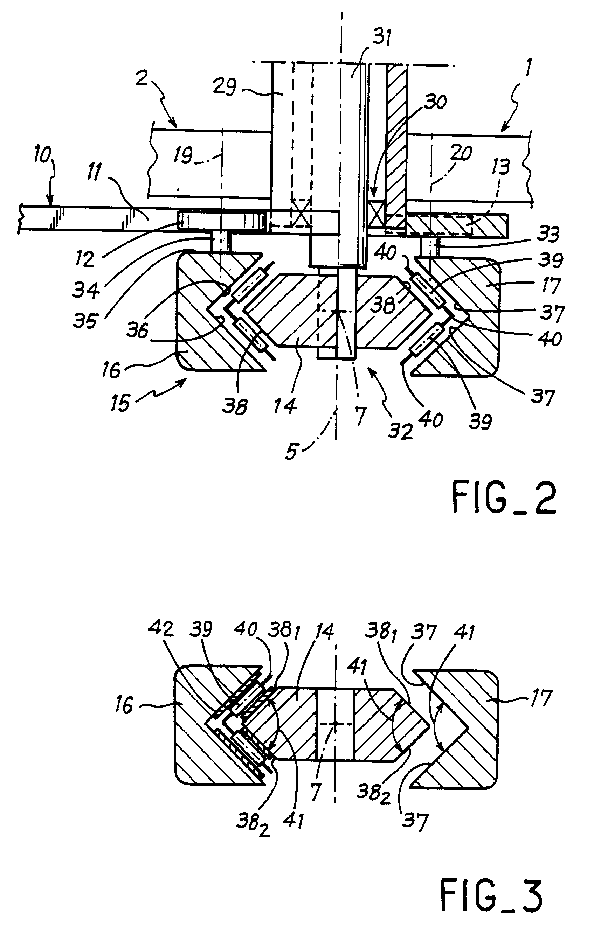

Comme illustré particulièrement aux figures 1 et 2, l'invention s'applique à un pédalier d'un cycle dont le cadre comporte un élément 1 tubulaire, dont l'extrémité inférieure est fixée au boîtier (repère 29, figure 2) de l'arbre de rotation du pédalier.

Le cadre comporte comme représenté figure 1, également de manière connue, un deuxième élément tubulaire 2, incliné vers l'avant, c'est-à-dire à gauche de la figure 1, et dont l'extrémité inférieure est également fixée, soudée par exemple, comme représenté figure 2, audit boîtier 29 de l'arbre 31 du pédalier.

Le pédalier entraîne de manière connue un plateau 3 schématiquement représenté par un cercle en traits mixtes, qui entraîne lui-même une chaîne dont les brins 4 sont partiellement représentés sur la figure 1.

Le pédalier comporte de manière connue un arbre central (repère 31 de la figure 2) qui s'étend à l'intérieur du boîtier 18, 29 de l'arbre, et qui est monté rotatif à l'intérieur de ce boîtier cylindrique par l'intermédiaire de roulements à bille (repère 30 de la figure 2).

A chaque extrémité 32 de l'arbre 31 du pédalier est montée une manivelle dont la longueur est variable pour moduler, lorsque l'arbre 31 et les manivelles associées effectuent un tour de rotation selon l'axe 5 de l'arbre 31, l'effort à exercer sur les pédales fixées aux extrémités libres des manivelles pour maintenir un couple constant au niveau du plateau 3 entraînant la chaîne 4.

Comme déjà décrit dans le brevet français sus-référencé, l'invention s'applique à des systèmes de pédalier dont les manivelles sont à longueur variable, qui utilisent pour ce faire une manivelle en deux parties : une partie 14 dite fixe, c'est-à-dire fixée rigidement à l'extrémité 32 de l'arbre 31 et tournant avec celui-ci, d'une part, et d'autre part un bras ou partie de manivelle 15 mobile, c'est-à-dire coulissant le long de la partie dite fixe repérée 14, selon un axe radial repéré 7, figure 1 à 3, selon lequel s'étendent les bras 14 et 15 ou parties de manivelle, et qui est représenté à la figure 1 dans une position verticale, par opposition à l'axe 6 oui représente un axe horizontal, lesquels axes se coupent sur l'axe 5 selon lequel tourne l'arbre 31 du pédalier.

Comme illustré aux figures 1 et 2, la face interne 35 de deux bras allongés 16 et 17 formant la partie 15 coulissante (ou mobile) de la manivelle, reçoit deux galets 12 et 13 montés rotatifs par rapport auxdites parties allongées 16 et 17 de la manivelle mobile, selon des axes respectifs 19 et 20, par l'intermédiaire d'arbres ou paliers 34 et 33 respectivement, comme illustré figure 2.

Lesdits galets 12 et 13, comme illustré figure 1, roulent sur la tranche ou surface périphérique 11 d'une came 10 ou excentrique, qui est fixée rigidement sur le palier 29 de l'arbre 31, c'est-à-dire qui est fixé rigidement par rapport au cadre de la bicyclette, et dont le profil n'est pas cylindrique et est excentré, comme illustré figure 1, par référence à l'axe 5 de rotation de l'arbre du pédalier.

Lesdits galets 12 et 13 permettent, du fait de leur contact avec la tranche de la came ou excentrique 10, lors de la rotation d'un tour de la manivelle 14, 15, le coulissement relatif de la partie mobile 15 par rapport à la partie 14 montée fixe par rapport à l'arbre 31, selon le même principe de fonctionnement que décrit dans le brevet français sus-référencé, ce oui provoque la variation ou la modulation, sur un tour de l'arbre 31, de la distance séparant l'axe 5 de rotation de l'arbre 31 et l'axe 43 de rotation de la pédale 8 fixée à l'extrémité libre de la partie mobile 15 de la manivelle, comme représenté figure 1, et ce qui permet ainsi une modulation de l'effort à exercer sur un tour.

Conformément à l'invention, les galets 12 et 13 s'étendent selon un prémier axe 23 faisant un prémier angle 26 avec l'axe 7 longitudinal de la manivelle 14, 15 qui est par exemple compris entre 5 et 45°.

Comme représenté figure 1, l'apogée 24 du profil de la came 10, c'est-à-dire le point le plus haut de sa face périphérique 11 (dans la vue de la figure 1, c'est-à-dire une vue transversale dans laquelle le cycle est en position verticale), définit avec la trace (dans le plan de la figure 1) de l'axe 5 de rotation de l'arbre 31, un deuxième axe 25 qui est incliné d'un deuxième angle 27 par rapport audit axe 7 longitudinal de la manivelle 14, 15 ; l'angle 27 est inférieur à l'angle 26, afin de permettre, lorsque la manivelle représentée figure 1, est dans la position de cette figure, correspondant au point mort haut, d'assurer que le galet 12 en contact avec la partie supérieure de la tranche 11 de la came 10, est dans cette position, et par référence au sens 28 de rotation de la manivelle et de l'arbre 31, situé au-delà de l'apogée 24 par son point de contact avec la surface 11 sur laquelle roule le galet 12.

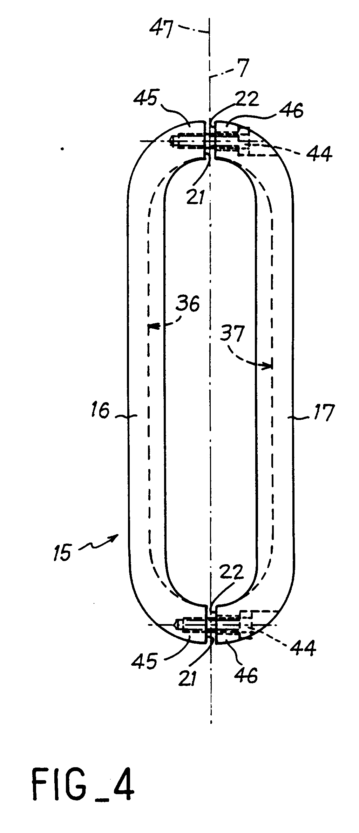

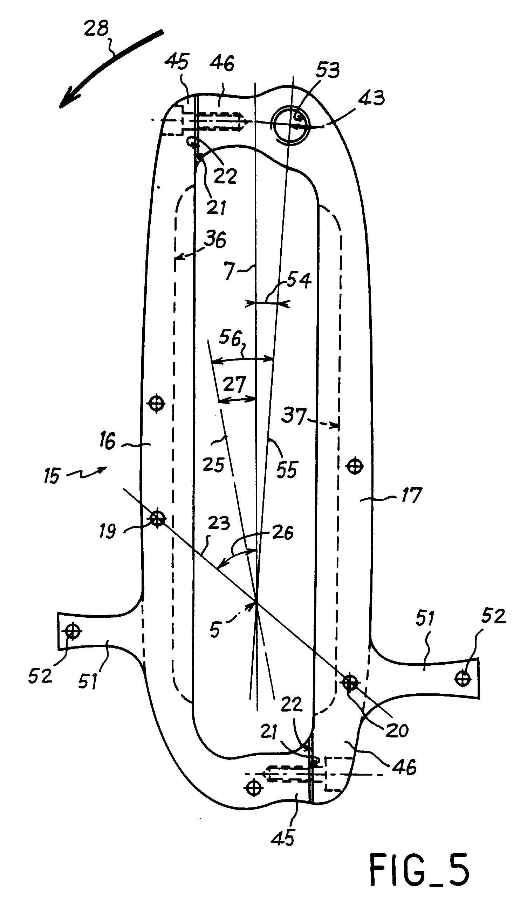

Comme représenté aux figures 4 et 5 particulièrement, la partie mobile 15 de la manivelle est essentiellement constituée par deux éléments 16 et 17 oui sont rectilignes ou sensiblement tubulaires dans leur partie centrale, et recourbés à une extrémité (figure 5) ou à leurs deux extrémités respectives 45 et 46 (figure 4), et dotés à leur extrémité supérieure et inférieure de faces d'appui respectives 21 et 22, par lesquelles les éléments 16 et 17 sont placés au contact et assemblés par des vis 44 par exemple.

Des cales de très faible épaisseur, par exemple du type cales pelables, sont éventuellement insérées entre les faces 21 et 22 d'extrémité des éléments 16 et 17, afin d'assurer le parallélisme de faces 36 et 37 en forme de 〈〈 V 〉〉 comme représenté également aux figures 2 et 3' qui définissent des faces d'appui et de glissement relatif de la manivelle mobile 15, par rapport à la manivelle fixe 14.

De préférence, comme représenté aux figures 2 et 3, ce coulissement entre la manivelle fixe 14 (de section hexagonale) et la manivelle mobile 15, est assuré par des cages 40 à aiguilles 39, s'étendant en vue en section transversale selon un angle sensiblement égal à l'angle 41 que font les surfaces 36 entre elles de l'élément 16, de même que pour les faces 37 définissant également un 〈〈 V 〉〉 de l'élément 17 de la manivelle mobile, et de même également que les faces 38, 38₁, 38₂ définissant également une forme de 〈〈 V 〉〉 pour les extrémités latérales de la partie fixe 14 de la manivelle.

Les aiguilles ou rouleaux 39, qui sont maintenues par les cages 40 coudées, sont en appui par une de leur génératrice sur les faces 36, 37, 38 de roulement et de guidage, et roulent sur celles-ci lors du coulissement relatif des parties 14 et 15 de chaque manivelle.

De cette manière, on obtient un coulissement ayant une grande raideur et un très faible coefficient de frottement, ainsi qu'un ensemble mécanique de manivelle de très faible encombrement et un très faible poids.

Dans le mode de réalisation représenté figure 3, dans le cas notamment où les éléments repérés 14, 16 et 17 de la manivelle sont réalisés dans un alliage métallique de dureté relativement faible, tel que de l'aluminium, les faces ou surfaces de roulement 36, 37, 38 peuvent être revêtues d'un feuillard ou revêtement 42, permettant de faciliter le roulement des aiguilles et le coulissement relatif des parties 14, 15 de manivelle, soit par exemple en diminuant le coefficient de frottement en prévoyant un revêtement anti-friction, soit en augmentant la dureté de la surface de contact avec les aiguilles 39, ou bien les deux à la fois.

Comme illustré figure 3, l'angle 41 que font les faces 36, 37 et 38 de coulissement disposées en regard les unes des autres des éléments de manivelle, est de préférence voisin de 90°.

Comme illustré figure 1, le centre 50 du périmètre de rotation dans le plan de la figure de la trace de l'axe 43, est distinct du centre 5 (trace de l'axe 5) de rotation de l'arbre et de la manivelle, et décalé par exemple horizontalement et en avant, d'une direction (qui a été volontairement exagérée sur la figure 1) correspondant à l'allongement maximum de la manivelle.

Par référence à la figure 5, la partie 17 de la manivelle mobile 15 comporte au voisinage de son extrémité (coudée) 46, un alésage cylindrique 53 apte à recevoir le bout d'arbre d'une pédale (non représentée) et qui s'étend selon l'axe 43 de rotation de la pédale.

Un axe 55 passant par la trace (dans le plan de la figure 5) de l'axe 43 et par la trace de l'axe 5, fait un angle 54 avec l'axe longitudinal 7 de la manivelle 15, dont la valeur est comprise entre 0 et moins 30 degrés (l'angle étant orienté en prenant comme axe de référence l'axe 7, et comme sens positif le sens de rotation 28).

L'angle 56 entre les axes 25 et 55, correspondant à la somme des angles 27 et 54, est strictement positif.

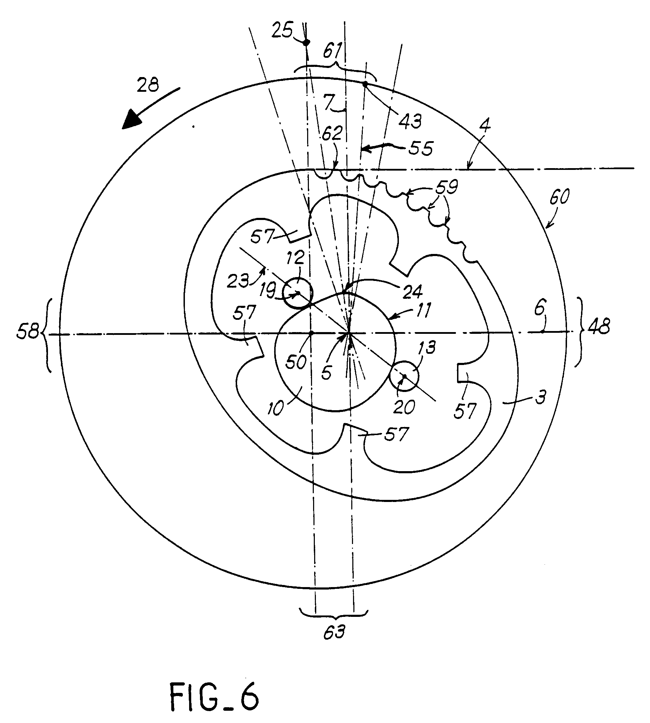

Dans le cas où le plateau 3 est fixé à la manivelle mobile 15, auquel cas son pourtour denté n'est pas circulaire mais de forme ovalisée (voir figure 6) adaptée à la forme de la carte, des languettes 51 munies de moyens de fixation 52 du plateau sont prévues sur la manivelle mobile, oui permettent la fixation sur celle-ci du plateau 3 muni de languettes 57 (voir figure 6) par l'intermédiaire éventuellement, d'une pièce (couronne) non représentée.

Par référence à la figure 6, le repère 60 désigne la trace, dans le plan vertical de la figure, de l'axe 43 de rotation de la pédale, oui est sensiblement circulaire, de centre 50 distinct de la trace de l'axe 5.

Le plateau doit être tel que le point 62 de traction des dents 59 sur la chaîne 4 soit toujours sensiblement le même (c'est-à-dire que le point 62 soit fixe dans 〈〈 l'espace 〉〉), cela afin de ne pas provoquer, du fait du déplacement du plateau avec la partie coulissante, de sur-tension brutale sur la chaîne, car cela pourrait induire un effort supplémentaire (effet de blocage) à faire de la part du cycliste, ou de sous-tension oui a pour effet de pédaler dans le 〈〈 vide 〉〉, et donc de perdre de l'efficacité.

La forme ovalisée du plateau est donc telle que le point 62, qui est tangent au profil externe du plateau en son sommet, soit fixe, afin que le brin supérieur tendu de la chaîne 4 s'étende selon une direction (ou un axe) fixe lors de la rotation et du déplacement en translation du plateau.

Le décalage de la pédale, des galets et de l'apogée 24 de la came 10, permet de franchir avec une grande facilité les zones 61 de point mort haut et de point mort bas (le fait de décaler le centre de rotation 5 du centre 50, crée plusieurs points morts hauts et points morts bas).

Lorsque l'axe 43 est aux alentours des points morts hauts et bas, les galets ont du jeu. Ledit jeu ne se ressent pas en fonctionnement. Par contre, quand l'axe 43 est dans l'une des deux zones de changement d'appui 48, 58 voisines de l'axe 6 horizontal, les galets ne doivent pas avoir de jeu car c'est à cet endroit que le galet en contact avec la came change.

Quand l'axe 43 est situé sur le cercle 60 avant la première zone 58 de changement d'appui, c'est le galet 12 oui est en contact avec la came ; par contre, après la zone 58, c'est le galet 13 qui est en contact avec la carte. S'il y a du jeu entre les galets et la came, cela provoque à ce moment là un petit bruit (〈〈 clic 〉〉) désagréable en pédalant. S'il n'y a pas de jeu, le bruit disparaît.

Ainsi, au point mort haut, c'est le galet 12 qui roule sur la tranche de la came 10, alors qu'au point mort bas, c'est le galet 13. De même, lorsque l'axe 43 est dans la deuxième zone 48 de changement d'appui, le changement de galet en contact, se fait de 13 à 12, ici sans incidence sur le bruit ou le jeu car le cycliste ne produit pratiquement pas d'effort sur les pédales.

## Revendications

1. Pédalier comportant deux bras ou manivelles de longueur variable,
- dans lequel chaque bras comporte une partie fixe (14) fixée à une extrémité (32) d'un arbre (31) d'entraînement du plateau (3) qui est mobile en rotation selon un axe (5) horizontal, et chaque bras comporte une partie (15) mobile en translation radiale par rapport à ladite partie fixe (14) et recevant une pédale (8) montée libre en rotation,
- lequel pédalier comporte en outre une carte (10) fixée au boîtier du pédalier, sur la tranche (11) de laquelle peuvent rouler deux et seulement deux galets (12, 13) montés libres en rotation selon des axes respectifs (19, 20), parallèles entre eux, par rapport à ladite partie mobile (15) du bras,
caractérisé en ce que, dans un plan perpendiculaire à l'axe (5) de rotation de l'arbre du pédalier, un axe (23) tournant avec lesdits bras passant par la trace dans ledit plan des axes (19) et (20) respectifs de rotation desdits galets (12, 13), fait un angle (26) positif avec l'axe longitudinal (7) selon lequel s'étend ledit bras (14, 15).

2. Pédalier suivant la revendication 1, dans lequel l'angle (26) séparant le premier axe (23) tournant avec le bras (15) et passant par la trace des axes de rotation des galets et l' axe (7) longitudinal tournant du bras, est supérieur à un angle (27) d'inclinaison entre un axe (25) passant par la trace de l'axe (5) et l'apogée (24) du profil périphérique de la came (10), et la verticale.

3. Pédalier suivant l'une quelconque des revendications 1 et 2, dans lequel ledit premier angle (26) a une valeur comprise entre 5 et 90 degrés.

4. Pédalier suivant l'une quelconque des revendications 2 à 3' dans lequel l'angle (27) a une valeur comprise entre 5 et 35 degrés.

5. Pédalier suivant l'une quelconque des revendications 1 à 4, dans lequel des moyens de guidage en translation de la partie mobile (15) de la manivelle par rapport à la partie fixe (14) de la manivelle, sont essentiellement constitués par des cages (40) à aiguilles (39).

6. Pédalier suivant l' une quelconque des revendications 1 à 5, dans lequel la partie mobile (15) de la manivelle est essentiellement constituée par deux éléments allongés (16, 17) courbés à l'une au moins de leurs extrémités (45,46) et assemblés par des faces planes (21, 22) situées auxdites extrémités (45, 46).

7. Pédalier suivant la revendication 6, comportant des cales insérées entre lesdites faces d'appui (21, 22) et aptes à permettre un réglage du parallélisme des faces (36, 37) de guidage en coulissement de l'élément mobile par rapport à l'élément fixe de la manivelle.

8. Pédalier suivant l'une quelconque des revendications 1 à 7, dans lequel ledit bras fixe (14) est essentiellement constitué par un élément allongé cylindrique, dont la section comporte au moins quatre côtés correspondant à des faces planes (38) parallèles deux à deux et définissant deux 〈〈 V 〉〉 disposés tête-bêche, dont les arêtes externes sont protubérantes latéralement et parallèlement à l'axe longitudinal de la manivelle et permettent de coopérer avec des faces planes parallèles deux à deux (36, 37) prévues sur les faces internes de la partie mobile (15) de la manivelle, et dans lequel lesdites faces (36, 37, 38) en forme de 〈〈 V 〉〉, permettant le coulissement et le guidage en translation de ladite partie mobile de manivelle par rapport à ladite partie fixe de manivelle, font un angle (41) compris entre 75 et 120°, par exemple voisin de 90°.

9. Pédalier suivant l' une quelconque des revendications 1 à 8, dans lequel le plateau (3) est fixé à la partie mobile (15) de la manivelle et est de forme ovale telle que le point (62), qui est tangent au profil externe du plateau en son sommet, soit fixe, afin que le brin supérieur tendu de la chaîne (4) s'étende selon une direction (ou un axe) fixe lors de la rotation et du déplacement en translation du plateau.

10. Pédalier suivant l'une quelconque des revendications 1 à 9, dans lequel l'axe (43) de rotation de la pédale est décalé de l'axe longitudinal (7, 47) de la manivelle, d'un angle (54) compris entre 0 et 30°.

## Claims

1. Crankset comprising two arms or cranks of variable length,
- in which each arm comprises a fixed portion (14) fixed to one end (32) of a drive shaft (31) of the chainwheel (3) which is mobile in rotation about a horizontal axis (5), and each arm comprises a portion (15) mobile in radial translation with respect to said fixed portion (14) and receiving a pedal (8) mounted to rotate freely,
- which crankset further comprises a cam (10) fixed to the casing of the crankset, on the edge (11) of which may roll two and only two rollers (12, 13) mounted to rotate freely about respective axes (19, 20), parallel to each other, with respect to said mobile portion (15) of the arm,
characterized in that in that, in a plane perpendicular to the axis (5) of rotation of the shaft of the crankset, an axis (23) rotating with said arms following the path in said plane of the respective axes (19) and (20) of rotation of said rollers (12, 13), makes a positive angle (26) with the longitudinal axis (7) along which said arm (14, 15) extends.

2. Crankset according to Claim 1, wherein the angle (26) separating the first axis (23) rotating with the arm (15) and following the path of the axes of rotation of the rollers and the rotating longitudinal axis (7) of the arm, is greater than an angle (27) of inclination between an axis (25) following the path of the axis (5) and the apogee (24) of the peripheral profile of the cam (10), and the vertical.

3. Crankset according to either one of Claims 1 and 2, wherein said first angle (26) has a value included between 5 and 90 degrees.

4. Crankset according to either one of Claims 2 to 3, wherein the angle (27) has a value included between 5 and 35 degrees.

5. Crankset according to any one of Claims 1 to 4, wherein means for guiding in translation the mobile portion (15) of the crank with respect to the fixed portion (14) of the crank are essentially constituted by cages (40) incorporating needle bearings (39).

6. Crankset according to any one of Claims 1 to 5, wherein the mobile portion (15) of the crank is essentially constituted by two elongated elements (16, 17) curved at at least one of their ends (45, 46) and assembled by plane faces (21, 11) located at said ends (45, 46).

7. Crankset according to Claim 6, comprising shims inserted between said abutment faces (21, 22) and adapted to allow an adjustment of the parallelism of the faces (36, 37) for guiding the mobile element in slide with respect to the fixed element of the crank.

8. Crankset according to any one of Claims 1 to 7, wherein said fixed arm (14) is essentially constituted by a cylindrical elongated element, whose section comprises at least four sides corresponding to plane faces (38) parallel in two's and defining two "V"s disposed head to tail, of which the outer edges are protuberant laterally and parallel to the longitudinal axis of the crank and make it possible to cooperate with plane faces parallel in two's (36, 37) provided on the inner faces of the mobile portion (15) of the crank, and in which said faces (36, 37, 38) in "V" form, allowing the slide and guiding in translation of said mobile crank portion with respect to said fixed crank portion, make an angle (41) included between 75 and 120°, for example close to 90°.

9. Crankset according to any one of Claims 1 to 8, wherein the chainwheel (3) is fixed to the mobile portion (15) of the crank and is oval in shape, such that the point (62) which is tangential to the outer profile of the chain wheel at its apex, is fixed, in order that the taut upper strand of the chain (4) extends in a fixed direction (or axis) upon rotation and displacement in translation of the chainwheel.

10. Crankset according to any one of Claims 1 to 9, wherein the axis (43) of rotation of the pedal is offset with respect to the longitudinal axis (7, 47) of the crank, by an angle (54) included between 0 and 30°.

## Patentansprüche

1. Tretkurbel mit zwei Armen oder Kurbeln veränderlicher Länge,
- bei der jeder Arm einen festen Teil (14) aufweist, der an einem Ende (32) einer Welle (31) zum Antreiben der Scheibe (3) befestigt ist, die um eine waagrechte Achse (5) drehbar ist, und jeder Arm einen Teil (15) aufweist, der bezogen auf den genannten festen Teil (14) radial verschiebbar ist und ein frei drehbar angebrachtes Pedal (8) trägt,
- wobei diese Tretkurbel ferner einen am Tretkurbelgehäuse befestigten Nocken (10) aufweist, auf dessen Rand (11) zwei und nur zwei Rollen (12, 13) abwälzbar sind, die um zugehörige zueinander parallele Achsen (19, 20) bezogen auf den genannten beweglichen Teil (15) des Arms frei drehbar angebracht sind, dadurch gekennzeichnet, daß in einer zur Drehachse (5) der Welle der Tretkurbel senkrechten Ebene eine Achse (23), die mit dem genannten Arm umläuft und sich durch die Spur in der genannten Ebene der Drehachsen (19) bzw. (20) der Rollen (12, 13) erstreckt, mit der Längsachse (7), in der sich der genannte Arm (14, 15) erstreckt, einen positiven Winkel (26) einschließt.

2. Tretkurbel nach Anspruch 1, bei der der Winkel (26), der die erste Achse (23) abteilt, die mit dem Arm (15) umläuft und sich durch die Spur der Drehachsen der Rollen und der umlaufenden Längsachse (7) des Arms erstreckt, größer als ein Schrägstellungswinkel (27) zwischen einer Achse (25), die sich durch die Spur der Achse (5) und dem Apogäum (24) des Umfangprofils des Nockens (10) erstreckt, und der Senkrechten ist.

3. Tretkurbel nach einem der Ansprüche 1 und 2, bei der der genannte erste Winkel (26) einen Wert zwischen 5 und 90 Grad hat.

4. Tretkurbel nach einem der Ansprüche 2 bis 3, bei der der Winkel (27) einen Wert zwischen 5 und 35 Grad hat.

5. Tretkurbel nach einem der Ansprüche 1 bis 4, bei der Führungsmittel zum Verschieben des beweglichen Teils (15) der Kurbel bezogen auf den festen Teil (14) der Kurbel im wesentlichen durch Käfige (40) für Nadeln (39) gebildet sind.

6. Tretkurbel nach einem der Ansprüche 1 bis 5, bei der der bewegliche Teil (15) der Kurbel im wesentlichen durch zwei langgestreckte Glieder (16, 17) gebildet ist, die an wenigstens einem ihrer Enden (45, 46) gekrümmt und an ebenen Stirnflächen (21, 22) zusammengesetzt sind, die an den genannten Enden (45, 46) angeordnet sind.

7. Tretkurbel nach Anspruch 6, mit Beilagen, die zwischen den genannten Anlageflächen (21, 22) eingebracht sind und ein Einstellen der Parallelität von Führungsflächen (36, 37) zum Gleiten des beweglichen Glieds bezogen auf das unbewegliche Glied der Kurbel ermöglichen.

8. Tretkurbel nach einem der Ansprüche 1 bis 7, bei der der genannte feste Teil (14) im wesentlichen durch ein langgestrecktes zylindrisches Glied gebildet ist, das im Schnitt wenigstens vier Seiten aufweist, die paarweise parallelen ebenen Flächen (38) entsprechen und zwei umgekehrt zueinander angeordnete "V"s bilden, deren äußere Kanten seitlich und parallel zur Längsachse der Kurbel ausgestülpt sind und ein Zusammenwirken mit den paarweise parallelen ebenen Flächen (36, 37) an den inneren Flächen des beweglichen Teils (15) der Kurbel ermöglichen, und bei der die genannten Flächen (36, 37, 38) in Form eines "V", die das Gleiten und das Führen beim Verschieben des genannten beweglichen Teils der Kurbel bezogen auf den genannten festen Teil der Kurbel ermöglichen, einen Winkel (41) zwischen 75 und 120° bilden, beispielsweise nahe 90°.

9. Tretkurbel nach einem der Ansprüche 1 bis 8, bei der die Scheibe (3) an dem beweglichen Teil (15) der Kurbel befestigt ist und die Form eines Ovals hat, so daß der Punkt (62), der das äußere Profil der Scheibe an ihrem Scheitel berührt, ortsfest ist, damit sich das obere gespannte Trum der Kette (4) beim Drehen und Verlagern durch Verschieben der Scheibe in einer festen Richtung (oder einer Achse) erstreckt.

10. Tretkurbel nach einem der Ansprüche 1 bis 9, bei der die Drehachse (43) des Pedals zur Längsachse (7, 47) der Kurbel um einen Winkel (54) zwischen 0 und 30° versetzt ist.
